# EUROPÄISCHE PATENTANMELDUNG

(11) **EP 3 984 661 A1**
(43) Veröffentlichungstag der Anmeldung: **20.04.2022**
(21) Anmeldenummer: 20202169.7
(22) Anmeldetag: 16.10.2020
(51) Int. Cl.: B09B 3/00, B09B 5/00, B29C 48/285, B29C 48/40, B29C 48/525, A62D 3/00

(54) **RECYCLING VON MINERALWOLLE**

(71) Anmelder: DESABAU GmbH, 35688 Dillenburg-Oberscheld (DE)
(72) Erfinder: Deusing, Ralf, 35688 Dillenburg-Oberscheld (DE); Deusing, Stefan, 35688 Dillenburg-Oberscheld (DE)
(74) Vertreter: Gille Hrabal Partnerschaftsgesellschaft mbB Patentanwälte

(57) **Zusammenfassung**

Beschrieben wird ein Verfahren zur Bearbeitung von Mineralwolle. Insbesondere wird ein Verfahren zur Bearbeitung von Mineralwolle beschrieben, bei welchem die Mineralwolle in eine Form überführt wird, in welcher sie für Menschen unschädlich ist. Weiterer Gegenstand der vorliegenden Erfindung ist eine exemplarische Vorrichtung zur Durchführung des beanspruchten Verfahrens

## Beschreibung

Die vorliegende Erfindung betrifft ein Verfahren zur Bearbeitung von Mineralwolle. Insbesondere betrifft die vorliegende Erfindung ein Verfahren zur Bearbeitung von Mineralwolle, so dass die Mineralwolle in eine Form überführt wird, dass sie für Menschen unschädlich ist. Weiterer Gegenstand der vorliegenden Erfindung ist eine exemplarische Vorrichtung für die Durchführung des beanspruchten Verfahrens.

Mineralwolle bezeichnet einen weichen Werkstoff aus künstlich hergestellten mineralischen Fasern. Je nach Ausgangsmaterial unterscheidet man Schlackenwolle, Glaswolle und Steinwolle.

Die Mineralwolle-Arten Steinwolle und Glaswolle bestehen aus künstlichen Mineralfasern (KMF) und dominieren im Bauwesen diese Dämmmaterialien. Nach der EU-Richtlinie 97/69/EG bestehen KMF aus ungerichteten, glasigen (Silikat-)Fasern mit einem Massengehalt von über 18 Prozent an Oxiden von Natrium, Kalium, Kalzium, Magnesium und Barium. Es wird zwischen "alter" und "neuer" Mineralwolle unterschieden. Der Begriff "alte Mineralwolle" umschreibt die Einstufung der Fasern als krebserzeugend, der Begriff "neue Mineralwolle" die Einstufung der Fasern als nicht krebserzeugend. Mineralwolle wird durch Aufschmelzen der Ausgangsmaterialien und Zerfaserung unter Zugabe von Bindemitteln hergestellt. Häufig wird Mineralwolle in Kombination mit Kaschierungen oder Bewehrungen eingesetzt.

Mineralwolle wird vorwiegend als nichtbrennbarer Dämmstoff für die Wärmedämmung von Häusern eingesetzt. In der Industrie wird sie insbesondere als Schall- und Brandschutz verwendet, z. B. zum Einhüllen von Tanks, Behältern, Heizkesseln und Turbinen. Mineralwolle wird meist als Vliesstoff hergestellt oder in stärkerer Verdichtung als Platten. Darüber hinaus wird Steinwolle auch als erdeloses Substrat zur Hydrokultur im industriellen Gemüse- und Zierpflanzenanbau eingesetzt.

Üblicherweise wird Abfall von Mineralwolle auf einer Deponie endgelagert. Wegen der geringen Schüttdichte von üblicherweise weniger als 100 kg/m³ nimmt die Alt-Mineralwolle ein unverhältnismäßig hohes Volumen ein, weshalb die Deponierung mit hohen Kosten verbunden ist.

Die groben Fasern der Mineralwolle, welche üblicherweise dicker als 3 µm sind, führen bei Hautkontakt zu Hautreizungen und bei den meisten Menschen zu Juckreiz. Empfindliche Haut kann stärker reagieren, mit Rötung, Schwellung und Ähnlichem.

Die gesundheitliche und arbeitsschutzrechtliche Bewertung von künstlichen Mineralfasern (KMF), zu denen auch Glas- und Steinwollfasern gehören, ist in der Technischen Regel für Gefahrstoffe (TRGS 521) oder in der Gefahrstoffverordnung (GefStoffV) geregelt. Besondere Vorsicht ist dabei vor allem bei älteren Gebäuden geboten, bei denen Mineralwolle aus den Jahren vor 1995 beziehungsweise 2000 verwendet wurde. Denn bis zu dieser Zeit war Mineralwolle erhältlich, deren Fasern kleiner als 3 µm sind. Da Fasern von dieser geringen Größe grundsätzlich als lungengängig gelten, gilt Mineralwolle aus dieser Zeit als "potentiell krebserregend" und ist folglich von der Gesundheitsgefahr vergleichbar mit dem Baustoff Asbest. Insbesondere bei alter Mineralwolle sind daher besondere Vorsichtsmaßnahmen zu ergreifen.

Mineralwolle muss für die Entsorgung sowie den Transport in speziellen Behältern verpackt werden. Hier stehen spezielle Säcke unterschiedlicher Größe sowie Spezialcontainer zur Auswahl. Diese sind so gestaltet, dass eine luftdichte Verpackung möglich ist und daher keine Fasern der Mineralwolle austreten können. Die fachgerecht verpackte Mineralwolle wird üblicherweise zu einer Entsorgungsfirma gebracht beziehungsweise von dieser abgeholt. Entsprechende Behälter, sogenannte Big Bags, werden von der Firma DESABAG, Dillenburg, Bundesrepublik Deutschland vertrieben. Der Forschungsbericht "LifeCycle KMF - Optimierung der Stoffströme im Lebenszyklus von Bauprodukten aus künstlichen Mineralfaserdämmstoffen", Frank U. Vogdt, Diana Fischer, Falk Schaudienst und Michael Schober, beschreibt einen vollständig geschlossenen Recyclingkreislauf für Mineralwolle beginnend mit dem Rückbau, über die Aufbereitung sowie die Verpackung und den Transport bis zur Rückführung in den Herstellungsprozess. Als Transportbehälter werden auch in dieser Entgegenhaltung (Seite 98) Säcke und Big Bags sowie containerauskleidende Big Bags der Desa-Group genannt. Unabhängig von der Entsorgung der Mineralwolle auf Deponien hat es in den letzten Jahren Untersuchungen zur Verarbeitung von Mineralwollfasern mit dem Ziel, die Mineralwolle entweder für Menschen unschädlich zu machen oder die Mineralwolle wieder in den Produktionskreislauf zurückzuführen, gegeben.

Das Journal of Material Cycles and Waste Management (2018) 20:1248-1256 beschreibt Verfahren zur Pulverisierung von faserförmigem Mineralwollabfall, wobei die Autoren dieser Publikation mehrere Maßnahmen zur Zerkleinerung von Mineralwolle untersuchen. Das Ziel der Studie war es herauszufinden, wie effizient verschiedene Zerkleinerungsmechanismen, welche die physikalischen Eigenschaften von Mineralwolle beeinflussen, sind. Zu diesem Zweck wurden in der vorliegenden Studie fünf Zerkleinerungsmethoden getestet. Eine hierbei angewendete Methode besteht in der Einwirkung von stationärem Druck auf die Mineralwolle, welcher durch eine hydraulische Presse auf Mineralwolle einwirkt. Als hydraulische Presse wird dabei die hydraulische Presse ABCO Mega verwendet. Dabei stellt die Studie auf Verfahren ab, um die Schüttdichte der Mineralwolle zu erhöhen und gleichzeitig die Faserigkeit zu verringern.

In der Studie hat sich herausgestellt, dass die Einwirkung von stationärem Druck auf die Mineralwolle gemäß der vorgeschlagenen Verfahrensweise zu einer vollständigen Pulverisierung der Mineralwolle führt. Allerdings ist das Verfahren unter Verwendung von statischem Druck verfahrenstechnisch nachteilig und kann nur schwerlich wirtschaftlich, beispielsweise durch eine kontinuierliche Verfahrensweise, durchgeführt werden.

Die Aufgabe der vorliegenden Erfindung ist daher die Bereitstellung eines verbesserten Verfahrens zur Bearbeitung von Mineralwollfasern, in welchem die Mineralwollfasern effizient verkleinert werden können.

Dabei soll das erfindungsgemäße Verfahren durch Steuerung der Prozessparameter es ermöglichen, in Abhängigkeit der gewünschten Weiterverwendung der bearbeiteten Mineralwolle entweder die Faserstruktur der Mineralwolle zu verkleinern oder aber vollständig zu zerstören.

Ist beispielsweise die Entsorgung der Mineralwollfasern gewünscht, soll das erfindungsgemäße Verfahren entweder zu einer Verkürzung der Mineralwollfasern führen, die für den Menschen ungefährlich ist, oder eine vollständige Zerstörung der Faserstruktur der Mineralwolle bewirken.

Ist beispielsweise die Wiederverwendung der Mineralwollfasern gewünscht, kann es entscheidend sein, dass die Faserstruktur der Mineralwolle aufrechterhalten wird. In diesem Fall soll das erfindungsgemäße Verfahren zu einer Verkürzung der Mineralwollfasern führen, die für den Menschen ungefährlich ist und gleichzeitig die Wiederverwendung der Fasern ermöglicht.

Unter diesem Aspekt ist es die Aufgabe der vorliegenden Erfindung, ein variables Verfahren zur Bearbeitung von Mineralwollfasern bereitzustellen, mit welchem die Fasern der Mineralwolle entweder so stark verkleinert werden, dass die Faserlänge auf ein Verhältnis von zumindest weniger als 3:1 im Verhältnis zur Breite der Faser verringert wird, oder aber vollständig zerstört wird.

Gelöst wird diese Aufgabe durch ein Verfahren zur Behandlung von Mineralwollfasern, wobei die Mineralwollfasern unter Einwirkung von Druck dergestalt einer Bewegung unterworfen werden, dass Reibungs- und/oder Scherkräfte auf die Mineralwollfasern einwirken und es durch die gemeinsame Einwirkung von Druck einerseits und Reibung und/oder Scherung andererseits zu einer Zerkleinerung der Mineralwollfasern unter in Wesentlicher Aufrechthaltung einer Faserstruktur der Mineralwolle kommt.

Es hat sich erfindungsgemäß herausgestellt, dass eine Verkleinerung von Mineralwollfasern möglich ist, wenn nicht nur statischer Druck auf die Fasern ausgeübt wird, sondern zusätzlich Reibungs- und Scherkräfte auf die Mineralwolle einwirken. Durch Steuerung der Druck-, Reibungs- und/oder Scherkräfte kann eine vollständige Zerkleinerung der Mineralwollfasern zu einer pulverförmigen Struktur, wie in der in dem Journal of Material Cycles and Waste Management (2018) 20:1248-1256 beschriebenen Studie unter Anwendung von statischem Druck, vermieden werden und es resultiert eine Faserstruktur der Mineralwolle, die einerseits für Menschen im Wesentlichen unschädlich ist und darüber hinaus in unterschiedlichen Anwendungsgebieten wiederverwendet werden kann.

Damit unterscheidet sich das erfindungsgemäße Verfahren im Wesentlichen von dem Verfahren, welches aus dem Journal of Material Cycles and Waste Management (2018) 20:1248-1256 bekannt ist, nach welchem es zu einer vollständigen Pulverisierung der Fasern der Mineralwolle kommt.

Das erfindungsgemäße Verfahren wird vorzugsweise in einem geschlossenen Bearbeitungsraum für die Mineralwollfasern durchgeführt. Die Verwendung von einem geschlossenen Bearbeitungsraum führt zu dem Vorteil, dass durch diese Maßnahme verhältnismäßig einfach ein gewünschter Druckbereich realisiert werden kann, mit welchem die Fasern beaufschlagt werden, und andererseits verhindert ein geschlossener Bearbeitungsraum, in welchen die Mineralwollfasern bearbeitet werden, deren unerwünschte Freisetzung. Somit wird eine Exposition der Mineralwollfasern gegenüber den Verfahrensanwendern vermieden.

Das erfindungsgemäße Verfahren wird vorzugsweise so durchgeführt, dass in einem kontinuierlichen Verfahren die Mineralwollfasern einem Druck und einer Krafteinwirkung durch Reibung und/oder Scherung ausgesetzt werden. Die verwendeten Kräfte von Druck, Reibung und Scherung können dabei gleichzeitig auf die Mineralwollfasern oder nacheinander auf die Mineralwollfasern ausgeübt werden.

In einer ersten Ausführungsform des erfindungsgemäßen Verfahrens wirken Druck, Reibung und/oder Scherkraft zeitgleich auf die Mineralwolle ein.

In einer zweiten Ausführungsform des erfindungsgemäßen Verfahrens wirken Druck, Reibung und/oder Scherkraft nacheinander auf die Mineralwolle ein.

Im Rahmen der vorliegenden Erfindung ist die erste Ausführungsform der zeitgleichen Krafteinwirkung bevorzugt.

Für das erfindungsgemäße Verfahren ist es von Vorteil, wenn die auf Fasern der Mineralwolle einwirkenden Kräfte aus Druck, Reibung und/oder Scherung kontinuierlich überwacht werden.

Sollte eine Verkürzung der Mineralwollfasern angestrebt werden, so wird das erfindungsgemäße Verfahren insbesondere so durchgeführt, bis eine Faser der Mineralwolle resultiert, in welcher die Faserlänge auf ein Verhältnis von zumindest weniger als 3:1 im Verhältnis zur Breite der Faser verringert wird. In dem erfindungsgemäßen Verfahren wird die Faserlänge und der Faserdurchmesser vorzugsweise kontinuierlich überwacht, so dass durch Anpassen von Druck und Reibungskraft und/oder Scherkraft und/oder Steuerung der Verfahrensdauer die gewünschte Spezifikation der Mineralwollfaser resultiert.

Sollten im Rahmen der vorliegenden Erfindung beispielsweise Verbundstoffe, enthaltend Fasern von Mineralwolle, aufgearbeitet werden, kann die Mineralwolle, in Abhängigkeit der geplanten weiteren Verwendung, zunächst von der Bewehrung, bei welcher es sich beispielsweise um eine Kaschierung aus Papier oder einer Aluminiumfolie oder um eine Drahtbewehrung handeln kann, befreit werden. In solch einem Fall bietet es sich an, die Fasern der Mineralwolle zunächst einmal einer ersten Vorstufe der Zerkleinerung zu unterwerfen. In dieser Vorstufe wird der Faserstoff vorzerkleinert, von seiner Bewehrung befreit und bezüglich weiterer Fremdbestandteile aufgeschlossen. Eine Befreiung der Mineralwolle von entsprechenden Bewehrungen ist insbesondere dann von Vorteil, wenn die aufgearbeiteten Fasern der Mineralwolle wieder erneut verwendet werden sollen. Bei einer abschließenden Entsorgung der aufgearbeiteten Fasern der Mineralwolle ist es nicht zwingend erforderlich, Bewehrungen aus dem Ausgangsmaterial vor Zerkleinerung zu entfernen.

Das erfindungsgemäße Verfahren kann darüber hinaus vorzugsweise in einer mobilen Vorrichtung realisiert werden. Der Vorteil der Erfindung bestehen dann darin, dass die Fasern der Mineralwolle beispielsweise direkt aus dem Abriss von Industrieanlagen ohne weitere Vorbehandlung verarbeitet werden können. Durch die dabei stattfindende Verdichtung der sehr voluminösen Mineralwolle ist es möglich, langfristig Deponiekosten einzusparen oder aber das resultierende Material wieder für neue Verwendungszwecke einzusetzen. Die Verwendung des resultierenden Materials für einen neuen Verwendungszweck stellt dabei einen wesentlichen Aspekt der vorliegenden Erfindung dar, da das erfindungsgemäße Produkt ein veredeltes Produkt liefert, das nicht mehr unbedingt als Abfall den Weg auf eine Deponie gehen muss, sondern den Charakter eines Wertstoffes annimmt.

Das erfindungsgemäße Verfahren kann in einer beliebigen Vorrichtung durchgeführt werden, solang die Vorrichtung in der Lage ist, entweder gleichzeitig oder sukzessive die vorstehend genannten Kräfte auf die Mineralwolle auszuüben.

Eine im Rahmen der vorliegenden Erfindung beispielsweise zu verwendende Vorrichtung ist ein Schneckenextruder, bei welchem die Fasern der Mineralwolle mittels einer Extruderschnecke, auch Schnecke genannt, in einem Schneckenzylinder, dessen Nenndurchmesser nahezu gleich dem Außendurchmesser der Schnecke ist, verarbeitet werden. Am vorderen Ende des Schneckenzylinders befindet sich die formgebende Auslassöffnung. Am hinteren Ende des Zylinders befindet sich der Antrieb, in den meisten Fällen ein Elektromotor mit Getriebeeinheit, der für die Rotation der Schnecke sorgt, sowie eine Öffnung für das zu verarbeitende Fasermaterial der Mineralwolle.

Entsprechende Schneckenextruder sind dem Fachmann hinlänglich bekannt und können beispielsweise als Einzelschneckenextruder oder Doppelschneckenextruder ausgebildet sein.

Bei Verwendung eines Schneckenextruders kann die aufzuarbeitende Mineralwolle, die beispielsweise unvorbehandelt in Form von Bahnen vorliegt und Kaschierungen aus Papier oder Aluminiumfolie und/oder Drahtgewebe enthalten kann, im Allgemeinen zunächst in einer ersten Vorrichtung von der Kaschierung oder Bewehrung befreit werden. Dieses kann beispielsweise in einer Schneidmühle erfolgen, in der auch eine Vorzerkleinerung, verbunden mit einem Aufschluss bezüglich der Kaschierung mit Papier, Alufolie und Draht, stattfindet. Bei der Zerkleinerung der Fasern der Mineralwolle entsteht ein feinflockiges Produkt. Durch die Vorzerkleinerung in dieser ersten Vorrichtung, die beispielsweise als Schneidmühle ausgebildet ist, wird etwa eine Vergrößerung des Ausgangsschüttgewichtes der in die erste Vorrichtung eingegebenen Fasern der Mineralwolle bewirkt.

Die so optional vorbehandelten Fasern der Mineralwolle werden aus dieser ersten Vorrichtung ausgetragen und können dann - ebenfalls optional beispielsweise über ein Förderband einem Schneckenextruder zugeführt werden.

Vor der Einführung der gegebenenfalls so aufbereiteten Fasern in den Extruder können ferromagnetische Fremdbestandteile, wie zerkleinerte Drahtstücke oder Rost, aus der Mineralwolle durch einen Magneten herausgetragen werden.

Nach dieser weiteren optionalen Abtrennung der ferromagnetischen Bestandteile erfolgt dann die eigentliche Bearbeitung der Fasern der Mineralwolle im Sinne der vorliegenden Erfindung beispielsweise in einem Schneckenextruder, in welchem die Fasern der Mineralwolle unter Einwirkung von Druck, Reibung und/oder Scherung umgewandelt werden.

Die Erfindung beruht auf der Erkenntnis, dass durch die Einwirkung von Druck, Reibung und/oder Scherung die sich überlappenden Fasern an Kreuzungs-/Kontaktstellen in Abhängigkeit von den ausgeübten Kräften brechen können. Je höher die Krafteinwirkung ist, desto kürzere oder bereits gebrochene Fasern brechen erneut.

Die beispielhafte erfindungsgemäße Vorrichtung zum Verkürzen von Mineralfasern als Schneckenextruder ist dadurch gekennzeichnet, dass sie umfasst:
i) eine Einführungskammer, in welche die zu bearbeitenden Mineralwollfasern aufgegeben werden;
ii) ein durch eine Extruderschnecke in einem Schneckenzylinder, dessen Nenndurchmesser nahezu gleich dem Außendurchmesser der Extruderschnecke ist, gebildetes Pressorgan, das gleichzeitig beim Verkleinern der Mineralwollfasern eine Reibung und/oder Scherung der Fasern bewirkt, und
iii) einen Druckventilkörper, der zwischen einer offenen und geschlossenen Faserauslassstellung beweglich ist und mit Druckmitteln in die geschlossene Faserauslassstellung gepresst wird.

Mit Hilfe der Extruderschnecke werden die zu verkürzenden Fasern in den Schneckenzylinder gedrückt und gegen den Druckventilkörper gepresst. Die Druckkraft, mit der der Druckventilkörper in seine geschlossene Stellung gedrückt wird, ist proportional zum Pressdruck, dem die zu verkürzenden Mineralfasern ausgesetzt sind. Durch Einstellung des Druckes mit Hilfe der Extruderschnecke und durch die einzustellende Reibungskraft und/oder Scherkraft kann die Faserlänge und damit das Längenverhältnis der mit dieser Vorrichtung erfindungsgemäß verkürzten Mineralfasern bestimmt werden.

Zur optimalen Verkürzung der Mineralfasern ist ein Schneckenzylinder vorgesehen, der beispielsweise ein zylindrisches Rohr aufweist, das zum Auslass hin konisch verjüngt ist. In diesem Fall ist auch die Schneckenform konisch geformt. Hierdurch wird der Druck, der auf die Mineralwollfasern einwirkt, zum Auslass des Schneckenextruders hin erhöht. Darüber hinaus ist es möglich, dass der konisch zulaufende Durchmesser verändert werden kann, so dass durch die Steuerung des Grads der konischen Verjüngung der Druck innerhalb des Schneckenextruders auf einfache Weise gesteuert werden kann.

In einer weiteren bevorzugten Ausführungsform umfasst die erfindungsgemäße Vorrichtung einen Trichter, in welche die aufzuarbeitende Mineralwolle eingeführt wird sowie eine Presskammer, in welche die Mineralwolle durch eine Schnecke eingepresst wird. Die dabei verwendete Schnecke weist vorzugsweise eine konische Form auf. Wenn der Druck in der Presskammer, in welcher die aufzuarbeitende Mineralwolle durch die Schnecke gepresst wird, einen vorher festgelegten Wert erreicht hat, öffnet sich der Pressraum, beispielsweise mittels einer Klappe, üblicherweise auf der der Schnecke gegenüberliegenden Seite des Pressraums und die verarbeitete behandelte Mineralwolle kann der erfindungsgemäßen Vorrichtung entnommen werden. Auch durch diese Vorrichtung werden neben Druck auch Reibungskräfte und/oder Scherkräfte auf die Mineralwolle ausgeübt, so dass es zu der erfindungsgemäß beabsichtigten Verkürzung oder Pulverisierung der Mineralwolle kommt.

Die verkürzten Mineralwollfasern können den Schneckenzylinder durch einen Ringspalt am Auslass verlassen, wenn ein ausreichender Druck sowie eine ausreichende Reibung und/oder Scherung auf die Fasern ausgewirkt wurden und die Mineralwollfasern die gewünschte Spezifikation, insbesondere die gewünschte Länge, den gewünschten Durchmesser und das gewünschte Aspektenverhältnis aus Länge zu Durchmesser, aufweist. Solange diese Spezifikation noch nicht erreicht ist, wird das erfindungsgemäße Verfahren fortgesetzt.

Bei einer variablen Zufuhr von Mineralwollfasern ist es bevorzugt, den in dem Schneckenzylinder erzeugten Druck an die Menge der zugeführten Mineralwollfasern anzupassen, so dass die Mineralwollfasern unabhängig von der Menge der zugeführten Fasern der Mineralwolle im Wesentlichen die gleiche Faserlängenverteilung aufweisen. Daher wird die Vorrichtung vorzugsweise mit einer Steuereinheit versehen, die den Druck, die Reibung und/oder die Scherung so variiert, dass die Druckkraft, Reibungskraft und/oder Scherkraft mit einer Zunahme der zugeführten zu verkürzenden Fasern abnimmt.

Bei dem erfindungsgemäßen Verfahren findet einerseits eine Verdichtung der sehr voluminösen Mineralwolle des Ausgangsschüttgewichtes statt. Zugleich entsteht auch eine reine und fein zerkleinerte Mineralfaser, welche als veredeltes Produkt nicht mehr als Abfall den Weg auf eine Deponie gehen muss, sondern den Charakter eines Wertstoffes annimmt. Beispielsweise ist es möglich, die so gewonnene Mineralfaser mit Wassergas über eine Tablettenpresse zu Kügelchen oder anderen Formen zu verarbeiten und anschließend dieses aus Kugeln bestehende Material wieder als Isoliermaterial zu verwenden. Von Vorteil erweist es sich, dass das so hergestellte Material nach dem Behandlungsprozess nur aus inertem anorganischen Material ohne organische Belastung besteht. Ferner treten bei dem Verfahren keine Glühverluste auf. Falls das Mineralfaserpulvermaterial nicht als Baustoff weiterverwendet wird, ergibt sich eine Einsparung von Deponiekosten im Vergleich zu aufgearbeiteter Alt-Mineralwolle, da das aufgearbeitete Produkt eine wesentlich höhere Schüttdichte aufweist.

## Patentansprüche

1. Verfahren zur Behandlung von Mineralwollfasern, wobei die Mineralwollfasern unter Einwirkung von Druck dergestalt einer Bewegung unterworfen werden, dass Reibungs- und/oder Scherkräfte auf die Mineralwollfasern einwirken und es durch die gemeinsame Einwirkung von Druck einerseits und Reibung und/oder Scherung andererseits zu einer Zerkleinerung der Mineralwollfasern unter in Wesentlicher Aufrechthaltung einer Faserstruktur der Mineralwolle kommt.

2. Verfahren nach Anspruch 1, **dadurch gekennzeichnet, dass** Druck, Reibung und/oder Scherkraft zeitgleich auf die Mineralwolle einwirken.

3. Verfahren nach Anspruch 1 oder 2, **dadurch gekennzeichnet, dass** Druck, Reibung und/oder Scherkraft nacheinander auf die Mineralwolle einwirken.

4. Verfahren nach einem der Ansprüche 1 bis 3, **dadurch gekennzeichnet, dass** die Mineralwolle durch das Verfahren so zerkleinert wird, dass eine Mineralwolle resultiert, deren Fasern eine Länge mit einem Verhältnis von zumindest weniger als 3:1 im Verhältnis zur Breite der Faser aufweisen.

5. Verfahren nach einem der Ansprüche 1 bis 4, **dadurch gekennzeichnet, dass** das Verfahren in einem Schneckenextruder durchgeführt wird.

6. Verfahren nach Anspruch 5, **dadurch gekennzeichnet, dass** das Verfahren in einem mehrwelligen Schneckenextruder durchgeführt wird.

7. Verfahren nach Anspruch 5 oder 6, **dadurch gekennzeichnet, dass** der Schneckenextruder einen Zylinder mit einer Einzugszone, einer Kompressionszone und einer Austragszone aufweist.

8. Verfahren nach einem der Ansprüche 5 bis 7, **dadurch gekennzeichnet, dass** der Schneckenextruder einen Zylinder aufweist, in welchem die Schneckenwellen liegen und wobei der Zylinder und die Schneckenform in der Kompressionszone zur Austragszone hin einen verjüngenden Querschnitt aufweist, wobei der Durchmesser der Verjüngung geregelt werden kann.

9. Verfahren nach Anspruch 8, **dadurch gekennzeichnet, dass** Druck, Reibung und/oder Scherung in der Kompressionszone des Schneckenextruders durch Einstellen des Durchmessers der Verjüngung, durch die Verweildauer in der Kompressionszone, insbesondere durch Steuerung der Öffnung der Verschlussklappe, erreicht wird.

10. Verfahren nach einem der Ansprüche 5 bis 9, **dadurch gekennzeichnet, dass** die Kompressionszone von der Austragszone durch eine zu öffnende Vorrichtung getrennt ist, durch welche die bearbeitete Mineralwolle in die Austragszone überführt wird, wenn die Spezifikation der Mineralwolle gemäß Anspruch 4 erreicht ist.

11. Verfahren nach Anspruch 10, **dadurch gekennzeichnet, dass** in der Kompressionszone die Spezifikation der Mineralwolle gemäß Anspruch 4 überwacht wird.

12. Verfahren nach Anspruch 11, **dadurch gekennzeichnet, dass** die Überwachung während des im Wesentlichen gesamten Verfahrens durchgeführt wird.

13. Verwendung einer Vorrichtung gemäß den Merkmalen der Ansprüche 5 bis 12 zur Bearbeitung von Mineralwollfasern.

14. Verwendung nach Anspruch 13, wobei eine Spezifikation der Mineralwollfasern gemäß Anspruch 4 erreicht wird.
